# FASCICULE DE BREVET EUROPEEN

(11) **EP 3 172 241 B1**
(45) Date de publication et mention de la délivrance du brevet: **12.09.2018**
(21) Numéro de dépôt: 15734703.0
(22) Date de dépôt: 09.07.2015
(51) Int. Cl.: B60C 1/00, C08C 19/22, C08K 3/36, C08K 5/34, C08L 15/00

(54) **COMPOSITION DE CAOUTCHOUC**
KAUTSCHUKZUSAMMENSETZUNG
RUBBER COMPOSITION

(30) Priorité: 21.07.2014 FR 1457013
(43) Date de publication de la demande: 31.05.2017
(73) Titulaire: Compagnie Générale des Etablissements Michelin, 63000 Clermont-Ferrand (FR)
(72) Inventeur: FLEURY, Etienne, F-63040 Clermont-Ferrand Cedex 9 (FR); THUILLIEZ, Julien, F-63040 Clermont-Ferrand Cedex 9 (FR); FAVROT, Jean-Michel, F-63040 Clermont-Ferrand Cedex 9 (FR)
(74) Mandataire: Gandon-Pain, Sylvie
(86) Numéro de dépôt international: PCT/EP2015/065753
(87) Numéro de publication internationale: WO 2016/012258

(56) Documents cités:
- WO-A1-2012/007441
- WO-A1-2012/007442
- WO-A1-2014/090756
- FR-A1- 2 935 979
- US-A1- 2006 084 730

## Description

La présente invention concerne une composition de caoutchouc diénique renforcée par une charge et utilisable notamment pour la fabrication de pneumatiques pour véhicules. Elle se rapporte plus particulièrement aux bandes de roulement des pneumatiques à faible résistance au roulement.

Depuis que les économies de carburant et la nécessité de préserver l'environnement sont devenues une priorité, il est souhaitable de produire des mélanges possédant de bonnes propriétés de résistance à l'usure tout en ayant une hystérèse aussi faible que possible afin de pouvoir les mettre en oeuvre sous forme de compositions de caoutchouc utilisables pour la fabrication de divers produits semi-finis entrant dans la composition de pneumatiques, tels que par exemple des bandes de roulement, ce afin d'obtenir des pneumatiques possédant une résistance à l'usure améliorée sans pénalisation de la résistance au roulement.

Idéalement, par exemple, une bande de roulement de pneumatique doit obéir à un grand nombre d'exigences techniques, souvent antinomiques, parmi lesquelles une résistance élevée à l'usure tout en offrant au pneumatique une faible résistance au roulement et une adhérence élevée tant sur sol sec que sur sol mouillé, enneigé ou verglacé.

Pour améliorer la résistance à l'usure, on le sait, une certaine rigidité de la bande de roulement est souhaitable, cette rigidification de la bande de roulement pouvant être obtenue par exemple en augmentant le taux de charge renforçante dans les compositions de caoutchouc constitutives de ces bandes de roulement. Malheureusement, l'expérience montre qu'une telle rigidification de la bande de roulement pénalise de manière connue, le plus souvent de manière rédhibitoire, les propriétés de résistance au roulement, en s'accompagnant d'une augmentation importante des pertes hystérétiques de la composition de caoutchouc. L'amélioration de la performance de rigidité en gardant une faible résistance au roulement est de ce fait une préoccupation permanente pour les concepteurs de pneumatique.

Il existe donc un besoin permanent de fournir une composition de caoutchouc qui permette d'obtenir des pneumatiques possédant un compromis de performances amélioré entre la résistance à l'usure et la résistance au roulement.

Au vu de ce qui précède, il est un objectif général de fournir des compositions de caoutchouc pour pneumatique qui satisfassent un compromis amélioré de propriétés entre la rigidité et l'hystérèse pour un usage en pneumatique, notamment en bande de roulement.

Les Demanderesses ont découvert que l'utilisation conjointe d'un élastomère diénique spécifique et d'un agent de modification dans une composition de caoutchouc permet de fournir une composition de caoutchouc alliant à la fois un très haut niveau de rigidité et un très faible niveau d'hystérèse.

Ainsi, un premier objet de l'invention est une composition de caoutchouc à base d'au moins un premier élastomère diénique, une charge renforçante, un agent de réticulation chimique, et un agent de modification, éventuellement déjà greffé sur le premier élastomère diénique, l'agent de modification comprenant un groupe Q et un groupe A reliés entre eux par un groupe B dans lequel :
- Q comprend un dipôle contenant au moins et de préférence un atome d'azote,
- A comprend un groupe associatif comprenant au moins un atome d'azote,
- B est un atome ou un groupe d'atomes formant une liaison entre Q et A, caractérisée en ce que le premier élastomère diénique avant greffage de l'agent de modification comprend les unités UA, UB, UC et UD suivantes, distribuées statistiquement au sein du premier élastomère diénique,
   UA) -CH₂-CH₂- selon un pourcentage molaire de m%
   UB) -CH₂-R₁C=CR₂-CH₂- selon un pourcentage molaire de n%
   UC) 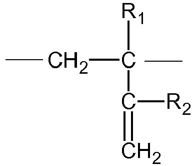 selon un pourcentage molaire de o%
   UD) 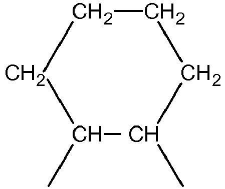 selon un pourcentage molaire de p%
      ▪ R₁ et R₂, identiques ou différents, désignant un atome d'hydrogène, un radical méthyle ou un radical phényle substitué ou non en position ortho, méta ou para par un radical méthyle,
      ▪ m ≥ 50
      ▪ 0 < o + p ≤ 25
      ▪ n + o > 0
      ▪ m, n, o et p étant des nombres allant de 0 à 100
      ▪ les pourcentages molaires respectifs de m, n, o, et p étant calculés sur la base de la somme de m + n + o + p qui est égale à 100.

L'invention a aussi pour objet un premier procédé pour préparer la composition conforme à l'invention, lequel procédé comprend les étapes suivantes :
▪ modifier le premier élastomère diénique en post-polymérisation ou en solution ou en masse par greffage de l'agent de modification,
▪ incorporer au premier élastomère diénique ainsi greffé par l'agent de modification, la charge renforçante et tous les constituants de base de la composition, à l'exception de l'agent de réticulation chimique, en malaxant thermomécaniquement le tout, en une ou plusieurs fois, jusqu'à atteindre une température maximale comprise entre 130°C et 200°C,
▪ refroidir l'ensemble à une température inférieure 100°C,
▪ incorporer ensuite l'agent de réticulation chimique,
▪ malaxer le tout jusqu'à une température maximale inférieure à 120°C.

L'invention a aussi pour objet un second procédé pour préparer la composition conforme à l'invention, lequel procédé comprend les étapes suivantes :
▪ incorporer au cours du mélangeage le premier élastomère diénique, l'agent de modification, de préférence subséquemment la charge renforçante et tous les constituants de base de la composition, à l'exception de l'agent de réticulation chimique, en malaxant thermomécaniquement le tout, en une ou plusieurs fois, jusqu'à atteindre une température maximale comprise entre 130°C et 200°C,
▪ refroidir l'ensemble à une température inférieure 100°C,
▪ incorporer ensuite l'agent de réticulation chimique,
▪ malaxer le tout jusqu'à une température maximale inférieure à 120°C.

L'invention a également pour objet un produit semi-fini en caoutchouc, notamment une bande de roulement pour un pneumatique, lequel produit semi-fini comprend la composition de caoutchouc conforme à l'invention.

L'invention a encore pour objet un pneumatique comprenant le produit semi-fini conforme à l'invention, notamment la bande de roulement conforme à l'invention.

### I. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

La composition de caoutchouc est à base d'au moins un premier élastomère diénique et un agent de modification. Le premier élastomère diénique peut être greffé par l'agent de modification préalablement à son introduction dans la composition de caoutchouc, ou bien peut être greffé par réaction avec l'agent de modification lors de la fabrication de la composition.

Dans la présente demande de brevet, l'appellation « le premier élastomère diénique » fait référence à l'élastomère avant sa réaction de greffage avec l'agent de modification.

Le premier élastomère diénique, c'est à dire par définition avant la réaction de greffage de l'agent de modification, comprend les unités UA, UB, UC et UD suivantes, lesquelles unités UA, UB, UC et UD sont distribuées statistiquement au sein du premier élastomère diénique,
UA) -CH₂-CH₂- selon un pourcentage molaire de m%
UB) -CH₂-R₁C=CR₂-CH₂- selon un pourcentage molaire de n%
UC) 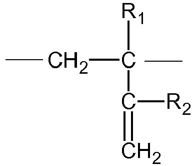 selon un pourcentage molaire de o%
UD) 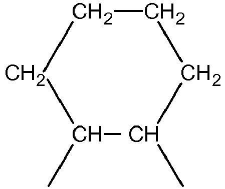 selon un pourcentage molaire de p%
   ▪ R₁ et R₂, identiques ou différents, désignant un atome d'hydrogène, un radical méthyle ou un radical phényle substitué ou non en position ortho, méta ou para par un radical méthyle,
   ▪ m ≥ 50
   ▪ 0 < o + p ≤ 25
   ▪ n + o > 0
   ▪ m, n, o et p étant des nombres allant de 0 à 100
   ▪ les pourcentages molaires respectifs de m, n, o, et p étant calculés sur la base de la somme de m + n + o + p qui est égale à 100.

Selon un mode de réalisation particulier de l'invention, le premier élastomère diénique contient des unités UE distribuées statistiquement au sein du premier élastomère diénique :
UE) 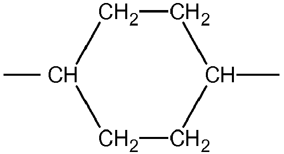 selon un pourcentage molaire de q%
   ▪ o + p + q ≥ 10
   ▪ q ≥ 0
   ▪ les pourcentages molaires respectifs de m, n, o, p et q étant calculés sur la base de la somme de m + n +o + p + q qui est égale à 100.

Alors que le motif de l'unité UD forme un cycle hydrocarboné bivalent à 6 atomes de carbone de type 1,2-cyclohexane, le motif de l'unité UE forme un cycle hydrocarboné bivalent à 6 atomes de carbone de type 1,4-cyclohexane.

Selon un autre mode de réalisation particulier de l'invention, le premier élastomère diénique contient des unités UF distribuées statistiquement au sein du premier élastomère diénique :
UF) 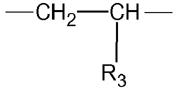 selon un pourcentage molaire de r%
   ▪ R₃ désignant un radical alkyle ayant de 1 à 4 atomes de carbone ou un radical aryle,
   ▪ 0≤ r ≤25, de préférence 0≤ r ≤10,
   ▪ les pourcentages molaires respectifs de m, n, o, p et r étant calculés sur la base de la somme de m+ n + o + p + r qui est égale à 100.

Selon ce mode de réalisation particulier de l'invention, le premier élastomère diénique peut comprendre q% d'unités UE distribuées statistiquement au sein du premier élastomère diénique, auquel cas les pourcentages molaires respectifs de m, n, o, p, q et r sont calculés sur la base de la somme de m+ n + o + p + q + r qui est égale à 100.

Il est entendu que le premier élastomère diénique peut être constitué par un mélange d'élastomères qui comprennent les unités UA, UB, UC, UD, UE et UF et qui se différencient des uns des autres par leur macrostructure ou leur microstructure, en particulier par le taux respectif de leurs unités.

Selon l'un quelconque des modes de réalisation de l'invention, de préférence le premier élastomère diénique ne contient pas d'unité UF.

Selon l'un quelconque des modes de réalisation de l'invention, au moins l'un des deux pourcentages molaires p et q est de préférence différent de 0. Autrement dit, de préférence le premier élastomère diénique contient au moins l'un des motifs qui sont un cycle hydrocarboné bivalent à 6 atomes de carbone de type 1,2-cyclohexane et un cycle hydrocarboné bivalent à 6 atomes de carbone de type 1,4-cyclohexane.

Selon l'un quelconque des modes de réalisation de l'invention, de manière plus préférentielle p est strictement supérieur à 0.

Selon un mode de réalisation préférentiel de l'invention, le premier élastomère diénique contient comme unités monomères uniquement les unités UA, UB, UC, UD et UE selon leur pourcentage molaire respectif m, n, o, p et q, de préférence tous différents de 0.

Selon un autre mode de réalisation préférentiel de l'invention, le premier élastomère diénique contient comme unités monomères uniquement les unités UA, UB, UC et UD selon leur pourcentage molaire respectif m, n, o et p, de préférence tous différents de 0 .

Selon l'un quelconque des modes de réalisations de l'invention, les unités UB présentes dans le premier élastomère diénique ont de préférence la configuration trans représentée par la formule suivante :

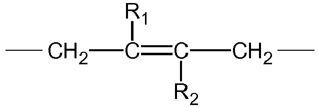

Selon l'un quelconque des modes de réalisation de l'invention, le premier élastomère diénique, présente de préférence une masse molaire moyenne en nombre (Mn) d'au moins 60 000 g/mol et d'au plus 1500 000 g/mol. L'indice de polydispersité Ip, égal à Mw/Mn (Mw étant la masse molaire moyenne en poids), est de préférence compris entre 1,20 et 3,00. Ce mode de réalisation préférentiel de l'invention s'applique à l'un quelconque des modes de réalisation de l'invention. Les valeurs de Mn, Mw et Ip sont mesurées selon la méthode décrite dans le paragraphe II.1.

Le premier élastomère diénique peut être obtenu selon différentes méthodes de synthèses connues de l'homme du métier, notamment en fonction des valeurs visées de m, n, o, p, q et r. Généralement, le premier élastomère diénique peut être préparé par copolymérisation d'au moins un monomère diène conjugué et d'éthylène et selon des méthodes de synthèse connues, en particulier en présence de système catalytique comprenant un complexe métallocène. On peut citer à ce titre les systèmes catalytiques à base de complexes métallocènes, lesquels systèmes catalytiques sont décrits dans les documents EP 1 092 731 A1, EP 1 554 321 A1, EP 1 656 400 A1, EP 1 829 901 A1, EP 1954 705 A1, EP 1 957 506 A1, au nom des Demanderesses.

A titre de monomère diène conjugué convient notamment un diène conjugué ayant de 4 à 12 atomes de carbone. On peut citer le 1,3-butadiène, le 2-méthyl-1,3-butadiène, 2,3-diméthyl-1,3-butadiène, un aryl-1,3-butadiène, le 1,3-pentadiène Selon un aspect préférentiel, le monomère diène est le 1,3-butadiène ou du 2-méthyl-1,3-butadiène, plus préférentiellement le 1,3-butadiène, auquel cas R1 et R2 représentent chacun un hydrogène.

Ainsi, selon certaines de ces méthodes de synthèse, le premier élastomère diénique peut être obtenu par copolymérisation d'au moins un monomère diène conjugué et de l'éthylène, en présence d'un système catalytique comprenant un complexe métallocène de lanthanide avec des ligands *ansa* de type fluorényle. On peut citer à ce titre les complexes métallocènes décrits dans les documents EP 1 092 731 A1, EP 1 554 321 A1, EP 1 954 705 A1.

Le premier élastomère diénique qui contient des unités UF selon un mode de réalisation particulier de l'invention peut être obtenu par copolymérisation d'au moins un monomère diène conjugué et de deux oléfines, telles que l'éthylène et une alpha-oléfine, en présence d'un système catalytique comprenant un complexe métallocène de lanthanide avec des ligands de type *ansa* cyclopentadiényle-fluorényle. A titre de monomère alpha-oléfine convient par exemple une alpha-oléfine ayant de 3 à 18 atomes de carbone, avantageusement ayant 3 à 6 atomes de carbone. On peut citer le propylène, le butène, le pentène, l'hexène ou un mélange de ces composés. Comme termonomère associé à au moins un monomère diène conjugué et l'éthylène, on peut aussi citer un dérivé du styrène. Les systèmes catalytiques à base de complexes métallocènes peuvent être ceux décrits dans les documents EP 1 092 731 A1, EP 1 656 400 A1, EP 1 829 901 A1, EP 1 957 506 A1, au nom des Demanderesses.

Le premier élastomère diénique peut être préparé conformément aux documents cités précédemment, en adaptant les conditions de polymérisation par des moyens connus de l'homme de l'art, de manière à atteindre des valeurs de masse molaire moyenne en nombre (Mn) d'au moins 60 000 g/mol. A titre d'illustration, le temps de polymérisation peut être significativement augmenté de telle sorte que la conversion en monomère soit supérieure, conduisant alors à l'obtention de masses molaires d'au moins 60 000 g/mol. A titre d'illustration, lors de la préparation des systèmes catalytiques selon les documents cités précédemment, la stoechiométrie de l'agent d'alkylation par rapport au(x) complexe(s) métallocène(s) est diminuée, de manière à diminuer les réactions de transfert de chaîne et permettre l'obtention de masses molaires d'au moins 60 000 g/mol.

La composition de caoutchouc peut comprendre en plus du premier élastomère diénique un second élastomère diénique. De préférence, le taux du premier élastomère diénique est d'au moins 50 pce.

Selon l'un quelconque des mode de réalisation de l'invention, le taux du premier élastomère diénique est de préférence d'au moins 70 pce, de manière plus préférentielle d'au moins 90 pce.

Le second élastomère diénique peut être tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans ce dernier cas, le copolymère contient de 20 à 99% en poids d'unités diéniques et de 1 à 80% en poids d'unités vinylaromatique. A titre de diènes conjugués conviennent notamment le 1,3-butadiène, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Le second élastomère diénique peut avoir toute microstructure. Il peut être à blocs, statistique, séquencé, microséquencé, et être préparé en émulsion ou en solution. Il peut être couplé et/ou étoilé ou encore fonctionnalisé avec un agent de couplage et/ou d'étoilage ou de fonctionnalisation.

Préférentiellement, le second élastomère diénique est choisi dans le groupe des élastomères diéniques fortement insaturés (à savoir comprenant au moins 50% en poids d'unités d'origine diénique qui comportent une double liaison carbone carbone) constitué par les polybutadiènes (BR), les polyisoprènes, les copolymères de butadiène, les copolymères d'isoprène et leur mélange. Les polyisoprènes peuvent être de synthèse (IR) ou le caoutchouc naturel (NR). Il est entendu que le second élastomère diénique peut être constitué par un mélange d'élastomères diéniques qui se différencient des uns des autres par leur microstructure, par leur macrostructure ou par la présence d'une fonction, par la nature ou la position de cette dernière sur la chaîne élastomère.

L'agent de modification comprend un (un ou plusieurs) groupe Q et un (un ou plusieurs) groupe A reliés entre eux par un groupe B dans lequel :
- Q comprend un dipôle contenant au moins et de préférence un atome d'azote,
- A comprend un groupe associatif comprenant au moins un atome d'azote,
- B est un atome ou un groupe d'atomes formant une liaison entre Q et A.

Selon un mode de réalisation préférentiel de l'invention, l'agent de modification contient de préférence un seul groupe Q relié au(x) groupe(s) A par le groupe B.

Selon l'un quelconque des modes de réalisation de l'invention, l'agent de modification contient de préférence un seul groupe Q et un seul groupe A reliés entre eux par le groupe B.

On entend par dipôle une fonction capable de former une cycloaddition dipolaire [1,3] sur une liaison carbone-carbone insaturée.

Par « groupe associatif », on entend des groupes susceptibles de s'associer les uns aux autres par des liaisons hydrogène, ioniques et/ou hydrophobes. Il s'agit selon un mode préféré de l'invention de groupes susceptibles de s'associer par des liaisons hydrogène. Lorsque les groupes associatifs sont susceptibles de s'associer par des liaisons hydrogène, chaque groupe associatif comporte au moins un « site » donneur et un site accepteur vis-à-vis de la liaison hydrogène de sorte que deux groupes associatifs identiques sont auto-complémentaires et peuvent s'associer entre eux en formant au moins deux liaisons hydrogène. Les groupes associatifs selon l'invention sont également susceptibles de s'associer par des liaisons hydrogène, ioniques et/ou hydrophobes à des fonctions présentes sur des charges.

Selon un mode de réalisation particulier de l'invention, le groupe A est choisi dans le groupe constitué par les groupes imidazolidinyle, triazolyle, triazinyle, bis-uréyle et uréido-pyrimidyle.

Selon un mode de réalisation préférentiel de l'invention, le groupe A répond à l'une des formules (I) à (V) suivantes : 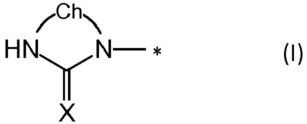 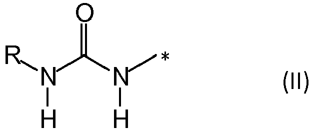 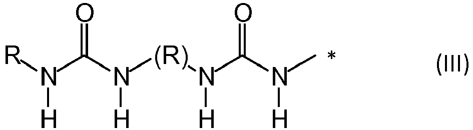 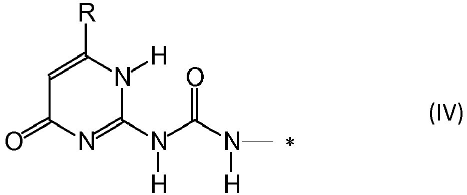 où : 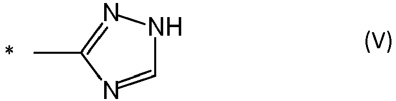
- Ch désigne une chaîne carbonée pouvant éventuellement contenir des hétéroatomes,
- * représente un rattachement direct à B,
- R désigne un groupe hydrocarboné pouvant éventuellement contenir des hétéroatomes,
- X désigne un atome d'oxygène ou de soufre, de préférence un atome d'oxygène.

Généralement, le cycle dans la formule (I) est un cycle à 5 ou 6 atomes.

Selon un mode de réalisation davantage préférentiel de l'invention, le groupe A répond à la formule (VI) 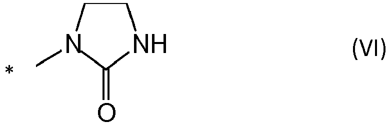 où * représente un rattachement direct à B.

Le groupe B qui est un atome ou un groupe d'atomes formant une liaison entre Q et A est de préférence un groupe contenant jusqu'à 20 atomes de carbone et pouvant contenir au moins un hétéroatome. B peut être une chaîne aliphatique contenant préférentiellement 1 à 20 atomes de carbone, plus préférentiellement 1 à 12 atomes de carbone, encore plus préférentiellement 1 à 6 atomes de carbone, ou un groupe contenant un motif aromatique et contenant préférentiellement 6 à 20 atomes de carbone, plus préférentiellement 6 à 12 atomes de carbone.

Selon un mode de réalisation préférentiel de l'invention, l'agent de modification est un composé 1,3-dipolaire choisi dans le groupe constitué par les oxydes de nitrile, les nitrones et les nitriles imines, auquel cas Q contient un motif -C≡N→O, -C=N(→O)- ou -C≡N→N-.

Selon le mode de réalisation particulier de l'invention où Q comprend un motif -C≡N→O, Q désigne préférentiellement le motif répondant à la formule (VII) dans laquelle quatre des cinq symboles R₄ à R₈, identiques ou différents, sont chacun un atome, en particulier H, ou un groupe d'atomes et le cinquième symbole désigne un rattachement direct à B, sachant que R₄ et R₈ sont de préférence tous les deux différents de H. Les quatre des cinq symboles R₄ à R₈ peuvent être des groupes aliphatiques ou des groupes contenant un (un ou plusieurs) motif aromatique. Les groupes aliphatiques peuvent contenir 1 à 20 atomes de carbone, préférentiellement 1 à 12 atomes de carbone, plus préférentiellement 1 à 6 atomes de carbone, encore plus préférentiellement 1 à 3 atomes de carbone. Les groupes contenant un (un ou plusieurs) motif aromatique peuvent contenir 6 à 20 atomes de carbone, préférentiellement 6 à 12 atomes de carbone. 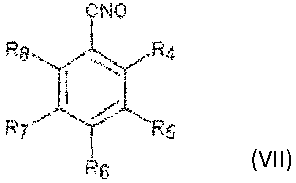 R₄, R₆ et R₈ sont préférentiellement chacun un groupe alkyle de 1 à 6 atomes de carbone, plus préférentiellement de 1 à 3 atomes de carbone, encore plus préférentiellement un groupe méthyle ou éthyle.

Selon une variante de ce mode de réalisation particulier de l'invention, R₄, R₆ et R₈ sont identiques. Selon cette variante où ils sont identiques, R₄, R₆ et R₈ sont préférentiellement chacun un groupe alkyle de 1 à 6 atomes de carbone, plus préférentiellement de 1 à 3 atomes de carbone, encore plus préférentiellement un groupe méthyle ou éthyle.

Selon un mode de réalisation préférentiel de cette variante, l'agent de modification est l'un des composés 1,3-dipolaires de formule (VIII) à (XIII) :

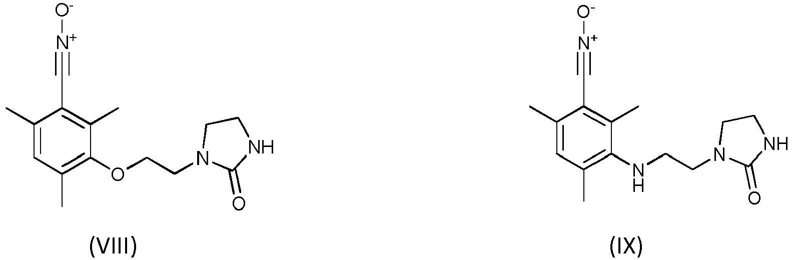

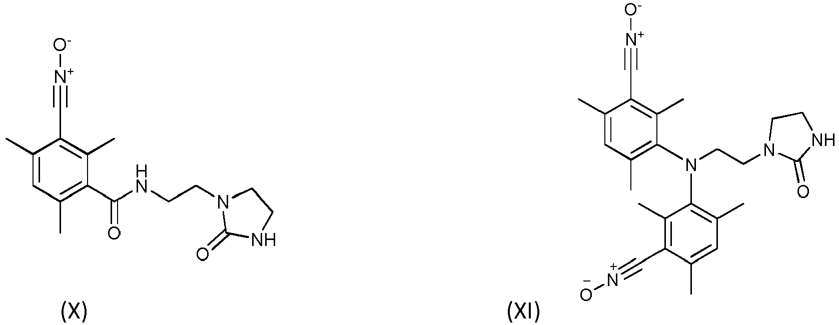

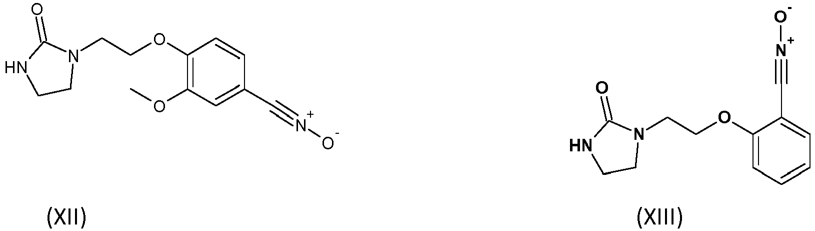

De manière davantage préférentielle, l'agent de modification est le composé 1,3-dipolaire de formule (VIII), le 2,4,6-triméthyl-3-(2-(2-oxoimidazolidin-1-yl)éthoxy)benzonitriloxide.

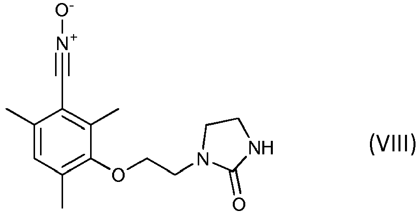

Selon le mode de réalisation particulier de l'invention où Q comprend un motif -C=N(→O)-, Q comporte préférentiellement le motif répondant à la formule (XIV) ou (XV) 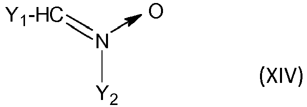 où : 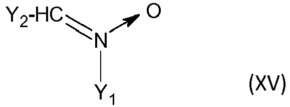
Y₁ est un groupe aliphatique, préférentiellement un groupe alkyle contenant de préférence 1 à 12 atomes de carbone, ou un groupe contenant 6 à 20 atomes de carbone et comportant un motif aromatique, préférentiellement un groupe aryle ou alkylaryle, plus préférentiellement un groupe phényle ou tolyle,
et Y₂ est un groupe aliphatique, préférentiellement un groupe hydrocarboné saturé contenant de préférence 1 à 12 atomes de carbone, ou un groupe comportant un motif aromatique et contenant préférentiellement 6 à 20 atomes de carbone, Y₂ comportant un rattachement direct à B.

Selon ce mode de réalisation particulier de l'invention, l'agent de modification est l'agent de modification est l'un des composés 1,3-dipolaires de formule (XVI) à (XX) : 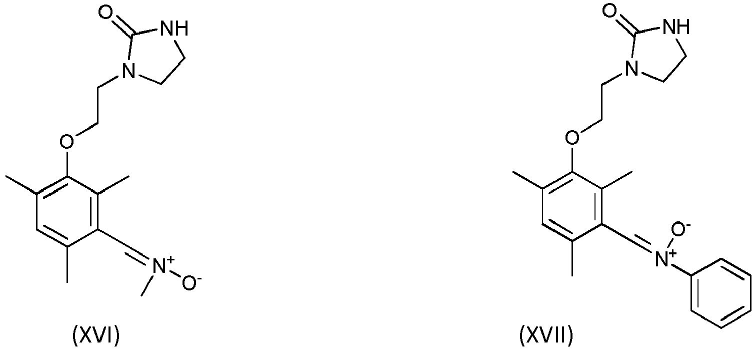 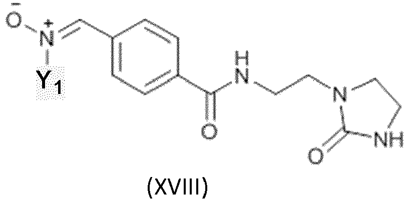 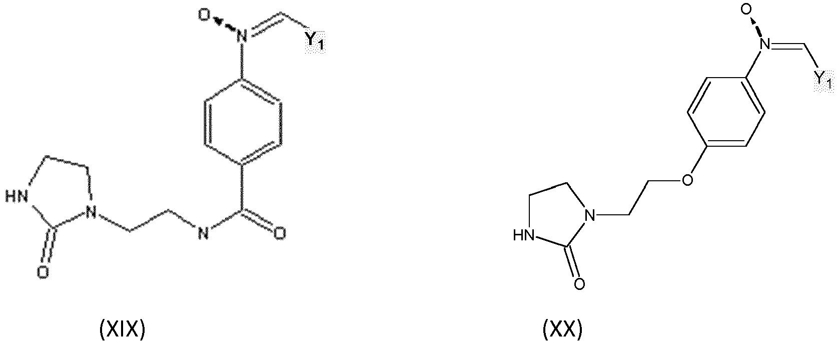 avec Y₁ étant tel que défini précédemment, à savoir un groupe aliphatique, préférentiellement un groupe alkyle contenant de préférence 1 à 12 atomes de carbone, ou un groupe contenant 6 à 20 atomes de carbone et comportant un motif aromatique, préférentiellement un groupe aryle ou alkylaryle, plus préférentiellement un groupe phényle ou tolyle.

Le taux d'agent de modification utilisé est exprimé en équivalent molaire de groupe A. Par exemple, si l'agent de modification contient un seul groupe A comme par exemple dans le composé 1,3-dipolaire de formule (VIII), à une mole d'agent de modification correspond une mole de groupe A. Si l'agent de modification contient deux cycles groupe A, à une mole d'agent de modification correspond deux moles de groupe A. Dans ce dernier cas l'utilisation de l'agent de modification selon un équivalent molaire de groupe A correspond à une demi-mole d'agent de modification.

Selon l'un quelconque des modes de réalisation de l'invention, la quantité d'agent de modification utilisée est préférentiellement de 0.01 à 50, plus préférentiellement de 0.01 à 10, encore plus préférentiellement de 0.03 à 5, mieux de 0.03 à 3 équivalents molaires de groupe A pour 100 moles d'unités monomères constituant le premier élastomère diénique.

La composition de caoutchouc conforme à l'invention comporte tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po :* 0.05 à 0.17). La surface spécifique CTAB est la surface externe déterminée selon la norme française NF T 45-007 de novembre 1987 (méthode B).

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Selon un mode de réalisation particulier de l'invention, la charge inorganique, préférentiellement une silice, représente plus de 50% en masse de la charge renforçante de la composition de caoutchouc. On dit alors que la charge inorganique renforçante est majoritaire.

Lorsqu'il est combiné à une charge inorganique renforçante majoritaire telle que la silice, le noir de carbone est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Selon un autre mode de réalisation particulier de l'invention, le noir de carbone représente plus de 50%, de préférence 100% en masse de la charge renforçante de la composition de caoutchouc.

Le taux de charge renforçante totale est compris préférentiellement entre 20 et 200 pce. En deçà de 20 pce, le renforcement de la composition de caoutchouc peut être insuffisant pour apporter un niveau de cohésion ou de résistance à l'usure adéquats du composant caoutchouteux du pneumatique comprenant cette composition. Au-delà de 200 pce, il existe un risque d'augmentation de l'hystérèse et donc de la résistance au roulement des pneumatiques. Pour cette raison, le taux de charge renforçante totale est plus préférentiellement entre 30 et 150 pce, encore plus préférentiellement de 50 à 150 pce, notamment pour un usage dans une bande de roulement de pneumatique. L'une quelconque de ces plages de taux de charge renforçante totale peut s'appliquer à l'un quelconque des modes de réalisation de l'invention.

Pour coupler la charge inorganique renforçante à l'élastomère diénique, on utilise de manière bien connue un agent de couplage, notamment un silane, (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (V)

Z-G-Sₓ-G-Z (V)

dans laquelle :
- x est un entier de 2 à 8 (de préférence de 2 à 5) ;
- les symboles G, identiques ou différents, représentent un radical hydrocarboné divalent (de préférence un groupe alkylène en C₁-C₁₈ ou un groupe arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 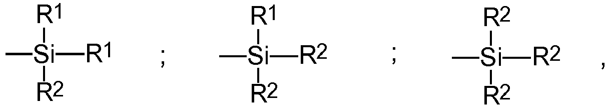 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevets WO 02/30939 (ou US 6,774,255), WO 02/31041 (ou US 2004/051210) ou encore des silanes ou POSS porteurs de groupes fonctionnels azo-dicarbonyle, tels que décrits par exemple dans les demandes de brevets WO 2006/125532, WO 2006/125533, WO 2006/125534.

La teneur en agent de couplage est avantageusement inférieure à 30 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 16 pce, plus préférentiellement compris dans un domaine allant de 3 à 10 pce. Ce taux est aisément ajusté par l'homme du métier selon le taux de charge inorganique utilisé dans la composition.

La composition de caoutchouc conforme à l'invention peut également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru.

Un autre composant de la composition selon l'invention est l'agent de réticulation chimique. La réticulation chimique permet la formation de liaisons covalentes entre les chaînes d'élastomère. L'agent de réticulation chimique peut être un système de vulcanisation ou un ou plusieurs composés peroxydes.

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine). Le soufre est utilisé à un taux préférentiel de 0.5 à 12 pce, en particulier de 1 à 10 pce. L'accélérateur primaire de vulcanisation est utilisé à un taux préférentiel compris entre 0.5 et 10 pce, plus préférentiellement compris entre 0.5 et 5 pce. On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. De préférence, on utilise un accélérateur primaire du type sulfénamide.

Lorsque la réticulation chimique est effectuée au moyen d'un ou plusieurs composés peroxydes, le ou lesdits composés peroxydes représentent de 0.01 à 10 pce. A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc conforme à l'invention peut comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des plastifiants ou des huiles d'extension, que ces derniers soient de nature aromatique ou non-aromatique, notamment des huiles très faiblement ou non aromatiques (e.g., huiles paraffiniques, naphténiques hydrogénées, huiles MES ou TDAE), des huiles végétales, en particulier les esters de glycérol comme les trioléates de glycérol, des pigments, des agents de protection tels que cires anti-ozone, anti-ozonants chimiques, anti-oxydants, des agents anti-fatigue, des résines renforçantes (tels que résorcinol ou bismaléimide), des accepteurs (par exemple résine phénolique novolaque) ou des donneurs de méthylène (par exemple HMT ou H3M) tels que décrits par exemple dans la demande WO 02/10269.

La composition de caoutchouc selon l'invention peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé l'agent de réticulation chimique, en particulier le système de vulcanisation.

De manière générale, tous les constituants de base de la composition comprise dans le pneumatique de l'invention, à l'exception de l'agent de réticulation chimique, à savoir la charge renforçante, l'agent de couplage le cas échéant, sont incorporés de manière intime, par malaxage, au premier élastomère diénique, le cas échéant au second élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en oeuvre complémentaires et autres additifs divers, à l'exception de l'agent de réticulation chimique. La durée totale du malaxage, dans cette phase non-productive, est de préférence comprise entre 1 et 15 min. Après refroidissement du mélange ainsi obtenu au cours de la première phase non-productive, on incorpore alors l'agent de réticulation chimique à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme semi-fini de pneumatique pour véhicule.

Ainsi selon un mode de réalisation particulier de l'invention, la composition de caoutchouc conforme à l'invention, pouvant être soit à l'état cru (avant réticulation ou vulcanisation), soit à l'état cuit (après réticulation ou vulcanisation), est un produit semi-fini qui peut être utilisé dans un pneumatique, notamment comme bande de roulement de pneumatique.

Un autre objet de l'invention est le procédé de préparation de la composition de caoutchouc décrite ci-dessus.

Le greffage du premier élastomère diénique se fait par réaction dudit élastomère avec le ou les groupes réactifs portés par l'agent de modification. Lors de cette réaction, ce ou ces groupes réactifs forment des liaisons covalentes avec la chaîne de l'élastomère. Le greffage de l'agent de modification est effectué par cycloaddition [3+2] du ou des groupes réactifs de l'agent de modification et une ou plusieurs doubles liaisons de la chaîne du polymère. Le produit de réaction d'un oxyde de nitrile, d'une nitrone et d'une imine de nitrile par exemple sur une unité 1,4-butadiène peut être illustré par les équations suivantes, dans lesquelles le symbole ¤ représente un quelconque substituant :
- Cycloaddition d'un oxyde de nitrile sur une unité butadiène 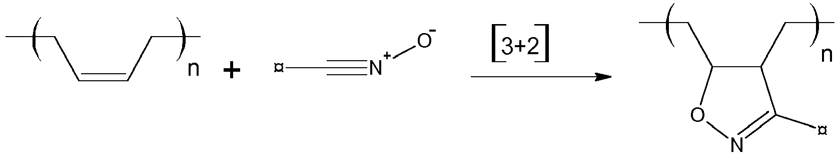
- Cycloaddition d'une nitrone sur une unité butadiène 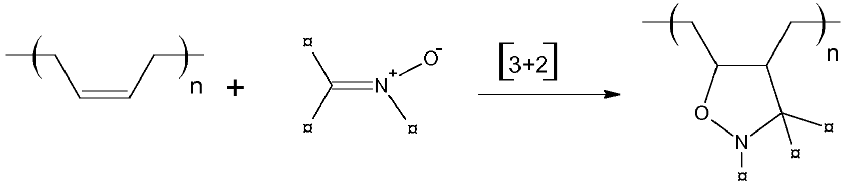
- Cycloaddition d'une nitrile imine sur une unité butadiène 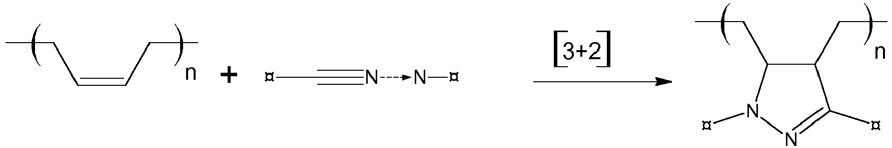 Le greffage de l'agent de modification peut être réalisé en masse, par exemple dans un mélangeur interne ou un mélangeur externe tel qu'un mélangeur à cylindres. Le greffage est alors mis en oeuvre soit à une température du mélangeur externe ou du mélangeur interne inférieure à 60°C, suivi d'une étape de réaction de greffage sous presse ou en étuve à des températures allant de 80°C à 200°C, soit à une température du mélangeur externe ou du mélangeur interne supérieure à 60°C sans traitement thermique postérieur.

Le greffage de l'agent de modification peut également être effectué en solution en continu ou en discontinu. Si le greffage a lieu en solution, l'élastomère greffé peut être séparé de sa solution par tout type de moyen connu par l'homme de l'art et en particulier par une opération de stripping à la vapeur d'eau.

Selon un premier mode de réalisation de l'invention, le premier élastomère diénique a été greffé par l'agent de modification préalablement à la fabrication de la composition de caoutchouc. Ainsi, dans ce cas, c'est le premier élastomère diénique greffé qui est introduit au cours de la première phase dite non-productive. Ainsi selon ce premier mode de réalisation du procédé, celui-ci comprend les étapes suivantes :
- modifier le premier élastomère diénique en post-polymérisation ou en solution ou en masse par greffage de l'agent de modification défini selon l'un quelconque des modes de réalisation de l'invention,
- incorporer au premier élastomère diénique ainsi greffé par l'agent de modification, la charge renforçante et tous les constituants de base de la composition, à l'exception de l'agent de réticulation chimique, en malaxant thermomécaniquement le tout, en une ou plusieurs fois, jusqu'à atteindre une température maximale comprise entre 130°C et 200°C, de préférence entre 145°C et 185°C,
- refroidir l'ensemble à une température inférieure à 100°C,
- incorporer ensuite l'agent de réticulation chimique,
- malaxer le tout jusqu'à une température maximale inférieure à 120°C.

Selon un second mode de réalisation de l'invention, le greffage du premier élastomère diénique par l'agent de modification est effectué concomitamment à la fabrication de la composition de caoutchouc. Dans ce cas, tant le premier élastomère diénique non encore greffé que l'agent de modification sont introduits au cours de la première phase dite non-productive. De manière préférentielle, la charge renforçante est alors ajoutée subséquemment au cours de cette même phase non-productive afin de prévenir toute réaction parasite avec l'agent de modification. Ainsi, selon ce deuxième mode de réalisation du procédé, celui-ci comprend les étapes suivantes:
- incorporer au premier élastomère diénique, l'agent de modification défini selon l'un quelconque des modes de réalisation de l'invention, et, de préférence subséquemment, la charge renforçante, ainsi que tous les constituants de base de la composition, à l'exception de l'agent de réticulation chimique, en malaxant thermomécaniquement le tout, en une ou plusieurs fois, jusqu'à atteindre une température maximale comprise entre 130°C et 200°C, de préférence entre 145°C et 185°C,
- refroidir l'ensemble à une température inférieure à 100°C,
- incorporer ensuite l'agent de réticulation chimique,
- malaxer le tout jusqu'à une température maximale inférieure à 120°C.

Selon ce second mode de réalisation de l'invention, l'incorporation du premier élastomère diénique avec l'agent de modification est menée à une température et pendant une durée telles que le rendement de greffage soit de préférence supérieur à 60%, plus préférentiellement supérieur à 80%.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Mesures et tests utilisés :

### Température de transition vitreuse

Les températures de transition vitreuse, Tg, des polymères sont mesurées au moyen d'un calorimètre différentiel (" differential scanning calorimeter "). L'analyse est réalisée selon les requis de la norme ASTM D3418-08.

### Chromatographie d'exclusion stérique

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Préparation du polymère: Il n'y a pas de traitement particulier de l'échantillon de polymère avant analyse. Celui-ci est simplement solubilisé, dans du (tétrahydrofuranne + 1%vol. de diisopropylamine + 1%vol. de triéthylamine + 1%vol. d'eau distillée) ou dans du chloroforme, à une concentration d'environ 1 g/l. Puis la solution est filtrée sur filtre de porosité 0,45µm avant injection.

Analyse SEC: L'appareillage utilisé est un chromatographe « WATERS alliance ». Le solvant d'élution est du tétrahydrofuranne + 1%vol. de diisopropylamine + 1%vol. de triéthylamine ou du chloroforme selon le solvant utilisé pour la mise en solution du polymère. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».
Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».
Les masses molaires moyennes calculées sont relatives à une courbe d'étalonnage réalisée à partir de polystyrènes étalons commerciaux « PSS READY CAL-KIT ».

### Propriétés dynamiques

Les propriétés dynamiques G* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 100% (cycle aller), puis de 100% à 0,1% (cycle retour). Les résultats exploités sont le module complexe de cisaillement dynamique (G*) et le facteur de perte tan(δ). Pour le cycle retour, on indique la valeur maximale de tan(δ) observée, noté tan(δ)max.

### II.2-Préparation des compositions de caoutchouc :

Les élastomères E1 et E2 sont utilisés pour la préparation des compositions de caoutchouc C1 et C2.
L'élastomère E1 est un copolymère de 1,3-butadiène et de styrène, SBR, contenant 26% en masse d'unités styrène et 24% en moles d'unités butadiène 1,2 de la partie butadiénique, de Mn = 163 000 g/mol, de Ip = 1.15 et de Tg = -48°C.
L'élastomère E2 est un copolymère de 1,3-butadiène et d'éthylène comportant 66% molaire d'unités éthylène, le complément à 100% étant constitué par les unités butadiène, réparties sous forme -1,2 (46.4% molaire des unités butadiène), -1,4 (31.8% molaire des unités butadiène) et -1,2-cyclohexyl (21.8 % molaire des unités butadiène), et présente une Mn de 175 000 g/mol, un Ip de 1.79 et une Tg de -43°C. L'élastomère E2 est préparé selon un procédé de polymérisation conforme à l'exemple 4-2 décrit dans le brevet EP 1 954 705 B1 au nom des Demanderesses.

Les formulations (en pce) des compositions C1 et C2 sont décrites dans le tableau I. Les compositions sont identiques, hormis la nature de l'élastomère. La composition C1 contient l'élastomère E1 (le SBR), la composition C2 contient l'élastomère E2 (le copolymère de 1,3-butadiène et d'éthylène). La composition C2 est conforme à l'invention, la composition C1 est une composition non conforme à l'invention et est une composition témoin de la composition C2.

Les compositions de caoutchouc sont préparées de la manière suivante : on introduit dans un mélangeur interne Polylab de 85cm³, rempli à 70% et dont la température initiale de cuve est d'environ 110°C, l'élastomère diénique et l'agent de modification, on conduit un travail thermomécanique de 1 à 2 min. Ensuite, on introduit la charge renforçante, l'agent de couplage puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" de 160°C. On récupère le mélange ainsi obtenu, on le refroidit puis on ajoute le système de vulcanisation (soufre) sur un mélangeur externe (homo-finisseur) à 25°C, en mélangeant le tout (phase productive) pendant environ 5 à 6 min.

Comme agent de modification, on utilise le composé 1,3-dipolaire 2,4,6-triméthyl-3-(2-(2-oxoimidazolidin-1-yl)éthoxy)benzonitriloxide dont la synthèse est décrite dans le document WO 2012007442. Pour les compositions C1 et C2, les taux d'agent de modification sont respectivement 1.40 pce et 2.40 pce, ce qui équivaut dans les deux cas à un taux molaire d'agent de modification identique pour 100 moles d'unité monomère d'élastomère, soit 0.3 mole d'agent de modification pour 100 moles d'unité monomère de l'élastomère E1 et E2 respectivement.

### II.3-Propriétés à cuit des compositions de caoutchouc :

Les compositions après vulcanisation, sont calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement. Les résultats sont consignés dans le tableau (II).

La composition C2 présente à la fois un haut niveau de rigidité à cuit et un très faible niveau d'hystérèse, comparativement à la composition C1 non conforme à l'invention. L'utilisation combinée de l'élastomère E2 et de l'agent de modification permet une diminution de 20% de tanδₘₐₓ à 23°C par rapport à l'utilisation combinée de E1 et du même agent de modification, alors que les deux élastomères E1 et E2 sont de même Tg et que l'agent de modification est utilisé à un même taux molaire pour 100 moles d'unités monomères d'élastomère dans les compositions C1 et C2. Ce résultat est d'autant plus remarquable que ce gain en hystérèse s'accompagne aussi d'une augmentation de 30% du module complexe de cisaillement G* à 23°C à 50% de déformation. Ce compromis de propriétés de la composition de caoutchouc entre l'hystérèse et la rigidité à cuit augure un compromis amélioré entre les performances de résistance au roulement et d'usure, notamment pour une bande de roulement de pneumatique.

**Tableau I**

| Composition | C1 | C2 |
|---|---|---|
| Elastomère E1 | 100 | - |
| Elastomère E2 | - | 100 |
| Noir de carbone (1) | 3.00 | 3.00 |
| Silice (2) | 90.00 | 90.00 |
| Silane (3) | 7.20 | 7.20 |
| Agent de modification (4) | 1.40 | 2.40 |
| DPG (5) | 1.60 | 1.60 |
| Plastifiant | 31.50 | 31.50 |
| Cire anti ozone | 1.65 | 1.65 |
| Antioxydant | 2.00 | 2.00 |
| Acide stéarique | 2.00 | 2.00 |
| ZnO | 2.00 | 2.00 |
| Soufre | 1.30 | 1.30 |
| Accélérateur | 2.00 | 2.00 |

| | | |
|---|---|---|
| 1) N330 2) Silice "Zeosil 1165 MP" société Rhodia sous forme de microperles 3) TESPT ("Si69" société Degussa) 4) 2,4,6-trimethyl-3-(2-(2-oxoimidazolidin-1-yl)ethoxy)benzonitriloxide 5) Diphénylguanidine (« Perkacit DPG » de la société Flexsys) | | |

**Tableau 2**

| Propriétés à cuit | C1 | C2 |
|---|---|---|
| G*_{(50%)} (MPa) | 100 | 130 |
| Tanδₘₐₓ | 100 | 80 |

## Revendications

1. Composition de caoutchouc à base d'au moins un premier élastomère diénique, une charge renforçante, un agent de réticulation chimique, et un agent de modification, éventuellement déjà greffé sur le premier élastomère diénique, l'agent de modification comprenant un groupe Q et un groupe A reliés entre eux par un groupe B dans lequel :
- Q comprend un dipôle contenant au moins et de préférence un atome d'azote,
- A comprend un groupe associatif comprenant au moins un atome d'azote,
- B est un atome ou un groupe d'atomes formant une liaison entre Q et A,
**caractérisée en ce que** :
le premier élastomère diénique avant greffage de l'agent de modification comprend les unités UA, UB, UC et UD suivantes, lesquelles unités UA, UB, UC et UD sont distribuées statistiquement au sein du premier élastomère diénique,
UA) -CH₂-CH₂- selon un pourcentage molaire de m%
UB) -CH₂-R₁C=CR₂-CH₂- selon un pourcentage molaire de n%
UC) 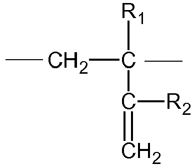 selon un pourcentage molaire de o%
UD) 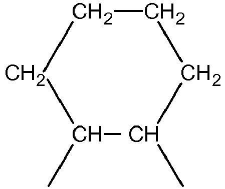 selon un pourcentage molaire de p%
▪ R₁ et R₂, identiques ou différents, désignant un atome d'hydrogène, un radical méthyle ou un radical phényle substitué ou non en position ortho, méta ou para par un radical méthyle,
▪ m ≥ 50
▪ 0 < o + p ≤ 25
▪ n + o > 0
▪ m, n, o et p étant des nombres allant de 0 à 100
▪ les pourcentages molaires respectifs de m, n, o, et p étant calculés sur la base de la somme de m + n + o + p qui est égale à 100.

2. Composition de caoutchouc selon la revendication 1 dans laquelle le premier élastomère diénique contient des unités UE distribuées statistiquement au sein du premier élastomère diénique,
UE) 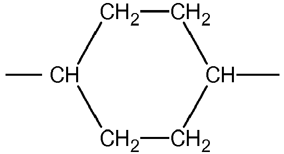 selon un pourcentage molaire de q%
▪ o + p + q ≥ 10
▪ q ≥ 0
▪ les pourcentages molaires respectifs de m, n, o, p et q étant calculés sur la base de la somme de m + n + o + p + q qui est égale à 100.

3. Composition de caoutchouc selon la revendication 1 ou 2 dans laquelle le premier élastomère diénique contient des unités UF distribuées statistiquement au sein du premier élastomère diénique.
UF) 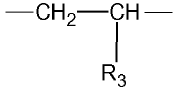 selon un pourcentage molaire de r%
▪ R₃ désignant un radical alkyle ayant de 1 à 4 atomes de carbone ou un radical aryle,
▪ 0≤ r ≤25.
▪ les pourcentages molaires respectifs de m, n, o, p, q et r étant calculés sur la base de la somme de m+ n + o + p + q + r qui est égale à 100.

4. Composition selon l'une quelconque des revendications 1 à 3 dans laquelle R₁ et R₂ sont identiques et désignent un atome d'hydrogène.

5. Composition selon l'une quelconque des revendications 1 à 4 dans laquelle le groupe A répond à l'une des formules (I) à (V) suivantes : 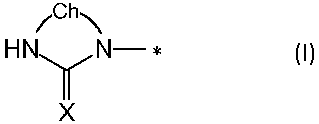 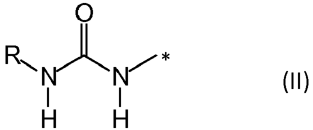 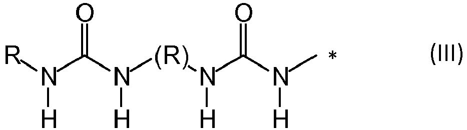 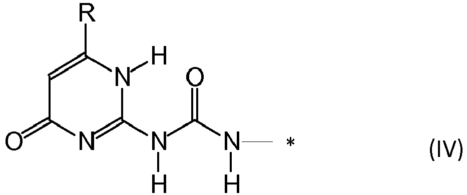 où : 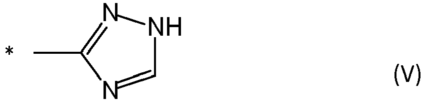
- Ch désigne une chaîne carbonée pouvant éventuellement contenir des hétéroatomes,
- * représente un rattachement direct à B,
- R désigne un groupe hydrocarboné pouvant éventuellement contenir des hétéroatomes,
- X désigne un atome d'oxygène ou de soufre, de préférence un atome d'oxygène.

6. Composition selon l'une quelconque des revendications 1 à 5 dans laquelle le groupe A répond à la formule (VI) 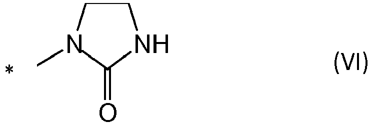 où * représente un rattachement direct à B.

7. Composition selon l'une quelconque des revendications 1 à 6 dans laquelle l'agent de modification est un composé 1,3-dipolaire choisi dans le groupe constitué par les oxydes de nitrile, les nitrones et les nitriles imines.

8. Composition selon l'une quelconque des revendications 1 à 7 dans laquelle le taux d'agent de modification varie de 0.01 à 50 équivalents molaire, de préférence de 0.01 à 10 équivalents molaire de groupe A pour 100 moles d'unités monomères constituant le premier élastomère diénique.

9. Procédé pour préparer une composition de caoutchouc selon l'une quelconque des revendications 1 à 8 qui comprend les étapes suivantes :
▪ modifier le premier élastomère diénique en post-polymérisation ou en solution ou en masse par greffage de l'agent de modification
▪ incorporer au premier élastomère diénique ainsi greffé par l'agent de modification, la charge renforçante et tous les constituants de base de la composition, à l'exception de l'agent de réticulation chimique, en malaxant thermomécaniquement le tout, en une ou plusieurs fois, jusqu'à atteindre une température maximale comprise entre 130°C et 200°C,
▪ refroidir l'ensemble à une température inférieure 100°C,
▪ incorporer ensuite l'agent de réticulation chimique,
▪ malaxer le tout jusqu'à une température maximale inférieure à 120°C.

10. Procédé pour préparer une composition de caoutchouc selon l'une quelconque des revendications 1 à 8 qui comprend les étapes suivantes :
▪ incorporer au premier élastomère diénique, l'agent de modification, et de préférence subséquemment, la charge renforçante et tous les constituants de base de la composition, à l'exception de l'agent de réticulation chimique, en malaxant thermomécaniquement le tout, en une ou plusieurs fois, jusqu'à atteindre une température maximale comprise entre 130°C et 200°C,
▪ refroidir l'ensemble à une température inférieure 100°C,
▪ incorporer ensuite l'agent de réticulation chimique,
▪ malaxer le tout jusqu'à une température maximale inférieure à 120°C.

11. Produit semi-fini en caoutchouc comprenant une composition selon l'une quelconque des revendications 1 à 8.

12. Produit semi-fini selon la revendication 11 en caoutchouc **caractérisé en ce qu'**il est une bande de roulement pour pneumatique.

13. Pneumatique qui comprend un produit semi-fini selon l'une quelconque des revendications 11 à 12.

## Patentansprüche

1. Kautschukzusammensetzung auf Basis von mindestens einem ersten Dienelastomer, einem verstärkenden Füllstoff, einem chemischen Vernetzungsmittel und einem Modifizierungsmittel, das gegebenenfalls bereits auf das erste Dienelastomer aufgepfropft ist, wobei das Modifizierungsmittel eine Gruppe Q und eine Gruppe A, die über eine Gruppe B miteinander verbunden sind, umfasst, wobei:
- Q einen Dipol, der mindestens und vorzugsweise ein Stickstoffatom enthält, umfasst,
- A eine assoziative Gruppe mit mindestens einem Stickstoffatom umfasst,
- B für ein Atom oder eine Gruppe von Atomen, das bzw. die eine Bindung zwischen Q und A bildet, steht,
**dadurch gekennzeichnet, dass**:
das erste Dienelastomer vor dem Aufpfropfen des Modifizierungsmittels die folgenden Einheiten UA, UB, UC und UD umfasst, wobei die Einheiten UA, UB, UC und UD in dem ersten Dienelastomer statistisch verteilt sind
UA) -CH₂-CH₂- gemäß einem Molprozentanteil m%
UB) -CH₂-R₁C=CR₂-CH₂- gemäß einem Molprozentanteil n%
UC) 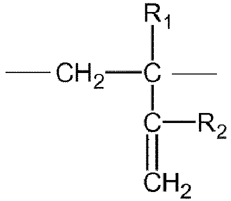 gemäß einem Molprozentanteil o%
UD) 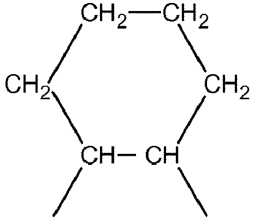 gemäß einem Molprozentanteil p%
▪ R₁ und R₂ gleich oder verschieden sind und für ein Wasserstoffatom, einen Methylrest oder einen Phenylrest, der gegebenenfalls in ortho-, meta- oder para-Position durch einen Methylrest substituiert ist, stehen,
▪ m ≥ 50,
▪ 0 < o + p ≤ 25,
▪ n + o > 0,
▪ wobei m, n, o und p Zahlen im Bereich von 0 bis 100 sind,
▪ wobei die jeweiligen Molprozentanteile von m, n, o und p auf der Basis der Summe von m + n + o + p, die gleich 100 ist, berechnet werden.

2. Kautschukzusammensetzung nach Anspruch 1, wobei das erste Dienelastomer Einheiten UE enthält, die in dem ersten Dienelastomer statistisch verteilt sind,
UE) 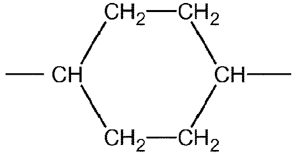 gemäß einem Molprozentanteil q%
▪ o + p + q ≥ 10,
▪ q ≥ 0,
▪ wobei die jeweiligen Molprozentanteile von m, n, o, p und q auf der Basis der Summe von m + n + o + p + q, die gleich 100 ist, berechnet werden.

3. Kautschukzusammensetzung nach Anspruch 1 oder 2, wobei das erste Dienelastomer Einheiten UF enthält, die in dem ersten Dienelastomer statistisch verteilt sind,
UF) 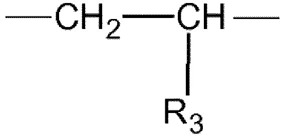 gemäß einem Molprozentanteil r%
▪ wobei R₃ für einen Alkylrest mit 1 bis 4 Kohlenstoffatomen oder einen Arylrest steht.
▪ 0 ≤ r ≤ 25,
▪ wobei die jeweiligen Molprozentanteile von m, n, o, p, q und r auf der Basis der Summe von m + n + o + p + q + r, die gleich 100 ist, berechnet werden.

4. Zusammensetzung nach einem der Ansprüche 1 bis 3, wobei R₁ und R₂ gleich sind und für ein Wasserstoffatom stehen.

5. Zusammensetzung nach einem der Ansprüche 1 bis 4, wobei die Gruppe A einer der folgenden Formeln (I) bis (V) entspricht: 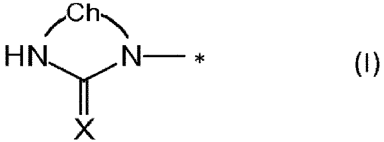 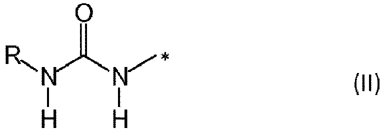 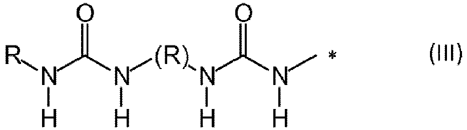 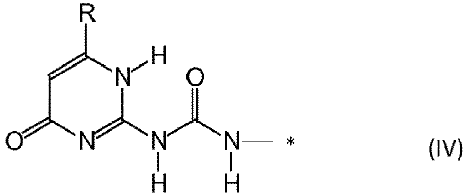 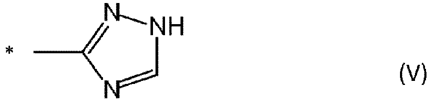 wobei:
- Ch für eine Kohlenstoffkette, die gegebenenfalls Heteroatome enthalten kann, steht,
- * für eine direkte Verknüpfung mit B steht,
- R für eine Kohlenwasserstoffgruppe, die gegebenenfalls Heteroatome enthalten kann, steht,
- X für ein Sauerstoff- oder Schwefelatom, vorzugsweise ein Sauerstoffatom, steht.

6. Zusammensetzung nach einem der Ansprüche 1 bis 5, wobei die Gruppe A der Formel (VI) 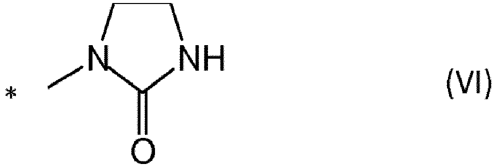 entspricht, wobei * für eine direkte Verknüpfung mit B steht.

7. Zusammensetzung nach einem der Ansprüche 1 bis 6, wobei es sich bei dem Modifizierungsmittel um eine 1,3-dipolare Verbindung aus der Gruppe bestehend aus Nitriloxiden, Nitronen und Nitriliminen handelt.

8. Zusammensetzung nach einem der Ansprüche 1 bis 7, wobei der Modifizierungsmittelgehalt von 0,01 bis 50 Moläquivalenten, vorzugsweise von 0,01 bis 10 Moläquivalenten, von Gruppe A pro 100 mol Monomereinheiten, aus denen das erste Dienelastomer aufgebaut ist, variiert.

9. Verfahren zur Herstellung einer Kautschukzusammensetzung nach einem der Ansprüche 1 bis 8, das folgende Schritte umfasst:
▪ Modifizieren des ersten Dienelastomers bei der Nachpolymerisation oder in Lösung oder in Substanz durch Aufpfropfen des Modifizierungsmittels,
▪ Einarbeiten des verstärkenden Füllstoffs und aller Grundbestandteile der Zusammensetzung mit Ausnahme des chemischen Vernetzungsmittels in das erste Dienelastomer, indem man das Ganze thermomechanisch knetet, bis eine Höchsttemperatur zwischen 130 °C und 200 °C erreicht ist,
▪ Abkühlen des Ganzen auf eine Temperatur von weniger als 100 °C,
▪ anschließendes Einarbeiten des chemischen Vernetzungsmittels,
▪ Kneten des Ganzen bis zu einer Höchsttemperatur von weniger als 120 °C.

10. Verfahren zur Herstellung einer Kautschukzusammensetzung nach einem der Ansprüche 1 bis 8, das folgende Schritte umfasst:
▪ Einarbeiten des Modifizierungsmittels und vorzugsweise anschließend des verstärkenden Füllstoffs und aller Grundbestandteile der Zusammensetzung mit Ausnahme des chemischen Vernetzungsmittels in das erste Dienelastomer, indem man das Ganze thermomechanisch knetet, bis eine Höchsttemperatur zwischen 130 °C und 200 °C erreicht ist,
▪ Abkühlen des Ganzen auf eine Temperatur von weniger als 100 °C,
▪ anschließendes Einarbeiten des chemischen Vernetzungsmittels,
▪ Kneten des Ganzen bis zu einer Höchsttemperatur von weniger als 120 °C.

11. Halbzeug aus Kautschuk, umfassend eine Zusammensetzung nach einem der Ansprüche 1 bis 8.

12. Halbzeug nach Anspruch 11 aus Kautschuk, **dadurch gekennzeichnet, dass** es sich um eine Lauffläche für einen Reifen handelt.

13. Reifen, der ein Halbzeug nach einem der Ansprüche 11 bis 12 umfasst.

## Claims

1. Rubber composition based on at least one first diene elastomer, a reinforcing filler, a chemical crosslinking agent, and a modifying agent, optionally already grafted to the first diene elastomer, the modifying agent comprising a group Q and a group A connected to one another by a group B in which:
- Q comprises a dipole containing at least and preferably one nitrogen atom,
- A comprises an associative group comprising at least one nitrogen atom,
- B is an atom or a group of atoms forming a bond between Q and A,
**characterized in that**:
the first diene elastomer before grafting the modifying agent comprises the following units UA, UB, UC and UD, which units UA, UB, UC and UD are randomly distributed within the first diene elastomer,
UA) -CH₂-CH₂- according to a molar percentage of m%
UB) -CH₂-R₁C=CR₂-CH₂- according to a molar percentage of n%
UC) 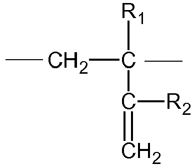 according to a molar percentage of o%
UD) 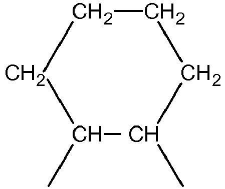 according to a molar percentage of p%
▪ R₁ and R₂, which are identical or different, denoting a hydrogen atom, a methyl radical or a phenyl radical which is unsubstituted or substituted in the ortho, meta or para position by a methyl radical
▪ m ≥ 50
▪ 0 < o + p ≤ 25
▪ n + o > 0
▪ m, n, o and p being numbers ranging from 0 to 100
▪ the respective molar percentages of m, n, o and p being calculated on the basis of the sum of m + n + o + p, which is equal to 100.

2. Rubber composition according to Claim 1, in which the first diene elastomer contains units UE randomly distributed within the first diene elastomer,
UE) 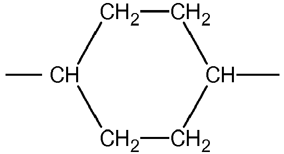 according to a molar percentage of q%
▪ o + p + q ≥ 10
▪ q ≥ 0
▪ the respective molar percentages of m, n, o, p and q being calculated on the basis of the sum of m + n + o + p + q, which is equal to 100.

3. Rubber composition according to Claim 1 or 2, in which the first diene elastomer contains units UF randomly distributed within the first diene elastomer,
UF) 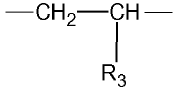 according to a molar percentage of r%
▪ R₃ denoting an alkyl radical having from 1 to 4 carbon atoms or an aryl radical
▪ 0 ≤ r ≤ 25
▪ the respective molar percentages of m, n, o, p, q and r being calculated on the basis of the sum of m + n + o+ p + q + r, which is equal to 100.

4. Composition according to any one of Claims 1 to 3, in which R₁ and R₂ are identical and denote a hydrogen atom.

5. Composition according to any one of Claims 1 to 4, in which the group A corresponds to one of the following formulae (I) to (V): 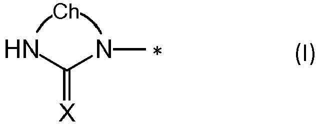 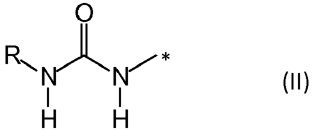 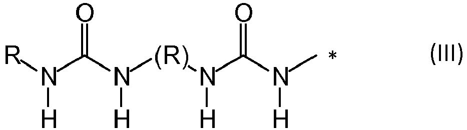 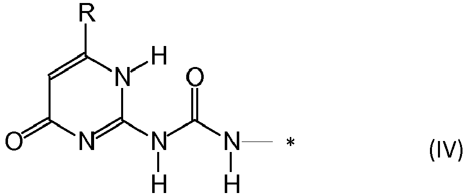 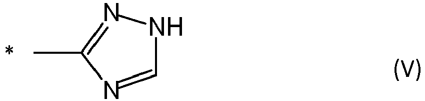 where:
- Ch denotes a carbon chain which can optionally contain heteroatoms,
- * represents a direct attachment to B,
- R denotes a hydrocarbon group which can optionally contain heteroatoms,
- X denotes an oxygen or sulphur atom, preferably an oxygen atom.

6. Composition according to any one of Claims 1 to 5 in which the group A corresponds to the formula (VI): 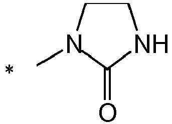 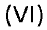 where * represents a direct attachment to B.

7. Composition according to any one of Claims 1 to 6, in which the modifying agent is a 1,3-dipolar compound selected from the group consisting of nitrile oxides, nitrones and nitrile imines.

8. Composition according to any one of Claims 1 to 7, in which the content of modifying agent varies from 0.01 to 50 molar equivalents, preferably from 0.01 to 10 molar equivalents of group A per 100 mol of monomer units constituting the first diene elastomer.

9. Process for preparing a rubber composition according to any one of Claims 1 to 8, which comprises the following steps:
▪ modifying the first diene elastomer in post-polymerization or in solution or in bulk by grafting the modifying agent
▪ Incorporating, to the first diene elastomer grafted in this way by the modifying agent, the reinforcing filler and all the base constituents of the composition, with the exception of the chemical crosslinking agent, by thermomechanically kneading everything, once or several times, until a maximum temperature of between 130°C and 200°C is achieved,
▪ cooling the combined mixture to a temperature of less than 100°C,
▪ then incorporating the chemical crosslinking agent,
▪ kneading everything up to a maximum temperature of less than 120°C.

10. Process for preparing a rubber composition according to any one of Claims 1 to 8, which comprises the following steps:
▪ Incorporating, to the first diene elastomer, the modifying agent, and preferably subsequently the reinforcing filler and all the base constituents of the composition, with the exception of the chemical crosslinking agent, by thermomechanically kneading everything, once or several times, until a maximum temperature of between 130°C and 200°C is achieved,
▪ cooling the combined mixture to a temperature of less than 100°C,
▪ then incorporating the chemical crosslinking agent,
▪ kneading everything up to a maximum temperature of less than 120°C.

11. Semi-finished product made of rubber comprising a composition according to any one of Claims 1 to 8.

12. Semi-finished product according to Claim 11, made of rubber, **characterized in that** it is a tyre tread.

13. Tyre that comprises a semi-finished product according to either one of Claims 11 and 12.
